Europäisches Patentamt

European Patent Office

Office européen des brevets

(11) Veröffentlichungsnummer: **0 032 970**

**A1**

(12) # EUROPÄISCHE PATENTANMELDUNG

(21) Anmeldenummer: **80100779.0**

(22) Anmeldetag: **15.02.80**

(51) Int. Cl.³: **A 01 J 5/04**

(30) Priorität: **29.01.80 DE 3002967**

(43) Veröffentlichungstag der Anmeldung:
**05.08.81 Patentblatt 81/31**

(84) Benannte Vertragsstaaten:
**AT BE CH FR GB IT LU NL SE**

(71) Anmelder: **Bauer, Andreas**

**D-8351 Edenstätten 44(DE)**

(71) Anmelder: **Schwarz, Anton**
**Birket 6**
**D-8351 Edenstätten(DE)**

(72) Erfinder: **Bauer, Andreas**

**D-8351 Edenstätten 44(DE)**

(72) Erfinder: **Schwarz, Anton**
**Birket 6**
**D-8351 Edenstätten(DE)**

(74) Vertreter: **Wasmeier, Alfons, Dipl.-Ing. et al,**
**Postfach 382 Greflingerstrasse 7**
**D-8400 Regensburg(DE)**

(54) Adapter zum Anschluss des Luftansaugstutzens eines Verbrennungsmotors an eine Melkanlage.

(57) Die Erfindung betrifft einen Adapter (10) zum Anschluß der Saugleitung (3) einer Melkanlage an den Luftansaugstutzen eines Verbrennungsmotors (12).

Die Besonderheit dieses Adapters (10) besteht darin, daß der Adaptereingang (11) und der Adapterausgang (8,9) über eine durch eine Umfangswand (24,39) nach außen begrenzte Kammer miteinander in Verbindung stehen, daß in der Umfangswand (24,39) der Kammer wenigstens eine in Ihrem Querschnitt veränderbare Drosselöffnung (34,35) vorgesehen ist, und daß ein Druckanzeigegerät (17) vorgesehen ist, dessen Meßeingang (44) mit dem Inneren der Kammer in Verbindung steht.

EP 0 032 970 A1

Fig.2

Adapter zum Anschluß des Luftansaugstutzens eines
Verbrennungsmotors an eine Melkanlage


Die Erfindung betrifft einen Adapter zum Anschluß der
Saugleitung einer Melkanlage an den Luftansaugstutzen eines
Verbrennungsmotors.

Elektrische Melkanlagen bzw. Melkmaschinen benötigen
für den Melkvorgang einen Unterdruck, der mit Hilfe einer
elektrisch betriebenen Ansaugpumpe erzeugt wird und der den
Melkeimern der Melkanlage über eine Saugleitung zugeführt
wird. Ein längerer Stromausfall oder aber Funktionsstörungen in der Ansaugpumpe bzw. in deren Antriebsmittel können
daher zu schwerwiegenden Beeinträchtigungen in einem landwirtschaftlichen Betrieb führen.

Aufgabe der Erfindung ist es, einen Adapter aufzuzeigen, der es gestattet, die Saugleitung einer Melkanlage
mit dem Luftansaugstutzen eines Verbrennungsmotors zu verbinden, um hierdurch bei Notsituationen durch den vom Verbrennungsmotor erzeugten Unterdruck den Betrieb einer Melkanlage aufrechterhalten zu können.

Zur Lösung dieser Aufgabe ist ein Adapter der eingangs
geschilderten Art erfindungsgemäß so ausgestaltet, daß der
Adaptereingang und der Adapterausgang über eine durch eine
Umfangswand nach außen begrenzte Kammer miteinander in Verbindung stehen, daß in der Umfangswand der Kammer wenigstens eine in ihrem Querschnitt veränderbare Öffnung
(Drosselöffnung) vorgesehen ist, und daß ein Druckanzeigegerät vorgesehen ist, dessen Meßeingang mit dem Inneren der Kammer in Verbindung steht.

Bei einem Stromausfall oder aber bei Funktionsstörungen in der Ansaugpumpe bzw. in den Antriebsmitteln der Ansaugpumpe einer Melkanlage wird der Eingang des erfindungsgemäßen Adapters mit dem Luftansaugstutzen eines Verbrennungsmotors, z.B. eines Schleppermotors oder eines Kraftfahrzeugmotors verbunden, während der Ausgang des Adapters an die Saugleitung der Melkanlage angeschlossen wird.

Nach dem Anlassen des Verbrennungsmotors erzeugt dieser dann bei geringer Gaseinstellung über den erfindungsgemäßen Adapter in der Saugleitung der Melkanlage den für den Melkvorgang erforderlichen Unterdruck. Da in der Regel die über die Saugleitung der Melkanlage zugeführte Luftmenge keinesfalls ausreicht, um den Motor mit der für den Verbrennungsvorgang notwendigen Luftmenge zu versorgen, stehen bei dem erfindungsgemäßen Adapter der Adaptereingang und der Adapterausgang über eine Kammer miteinander in Verbindung, die wenigstens eine in ihrem wirksamen Querschnitt veränderbare Drosselöffnung aufweist, über welche zusätzliche, für den Verbrennungsvorgang im Verbrennungsmotor notwendige Luft angesaugt werden kann. Die Drosselöffnung wird dabei so eingestellt, daß einerseits der Verbrennungsmotor einwandfrei arbeitet, d.h. eine für den Verbrennungsvorgang ausreichende Luftmenge erhält, andererseits am Adapterausgang ein genügend hoher Unterdruck, z.B. ein Unterdruck von 0,4 tor entsteht, der zum Betrieb der Melkanlage ausreichend ist. Die genaue Einstellung dieses Unter- bzw. Saugdruckes erfolgt mit Hilfe des Druckanzeigegerätes durch entsprechendes Verstellen der Drosselöffnung.

Bei einer bevorzugten Ausführungsform des erfindungsgemäßen Adapters ist weiterhin zwischen Adaptereingang und Adapterausgang ein Luftfilter vorgesehen, mit welchem zur Vermeidung von Schäden am Motor das Eindringen von festen Partikeln, z.B. von Staubpartikeln, von feuchter Luft oder von Kondenswasser in den Luftansaugstutzen des Motors vermieden wird. Dieser Luftfilter ist dabei vorzugsweise so im Adapter angeordnet, daß der Luftfilter dem mit dem Luftansaugstutzen des Verbrennungsmotors zu verbindenden Adaptereingang näherliegt als die in ihrem Querschnitt veränderbare Drosselöffnung, so daß mit dem Luftfilter nicht nur die über die Saugleitung der Melkanlage angesaugte Luft, sondern auch die über die Drosselöffnung zusätzlich eintretende Luft gereinigt bzw. von Staubpartikeln, Feuchtigkeit und so weiter befreit wird, bevor diese Luft in den Luftansaugstutzen des Verbrennungsmotors eintritt.

Der Luftfilter enthält vorzugsweise ein Filterelement, welches den bei Verbrennungsmotoren üblichen Luftfiltern entspricht und welches als Filtermaterial Papier verwendet. Der Adapter ist hierbei dann so ausgebildet, daß das Filterelement ohne Schwierigkeiten von Zeit zu Zeit ausgewechselt werden kann.

Der Ausgang wird bei dem erfindungsgemäßen Adapter vorzugsweise von einem flexiblen Schlauch, beispielsweise von einem Schlauch mit einer Länge von 5 m gebildet, der an seinem Ende eine Anschlußmanschette trägt, so daß der Adapter ohne Schwierigkeiten an die Saugleitung einer vorhandenen Melkanlage anschließbar ist. Mit Ausnahme des Druckanzeigegerätes bzw. mit Ausnahme von Einzelteilen dieses Druckanzeigegerätes, bestehen sämtliche Teile des erfindungsgemäßen Adapters vorzugsweise aus Kunststoff, wodurch sich eine absolut rostfreie Ausführung ergibt. Als Druckanzeigegerät kann ein übliches und auf dem Markt erhältliches Unterdruckmanometer (Tormeter) Verwendung finden.

Weiterhin ist es bei dem erfindungsgemäßen Adapter zweckmäßig, wenigstens ein Sichtfenster in diesem Adapter vorzusehen oder aber zumindest einen Teil des Adapters aus durchsichtigem Material herzustellen. Hierdurch ist es möglich, ein ev. Mitführen von größeren Mengen an Flüssigkeit sowie ein ev. Mitführen von Milch durch die angesaugte Luft rechtzeitig festzustellen, um den Verbrennungsmotor abzuschalten, bevor die durch die angesaugte Luft mitgeführte Flüssigkeit bzw. Milch in den Luftansaugstutzen des Verbrennungsmotors gelangt und dort zu Beschädigungen führt.

Weiterbildungen der Erfindung sind in den Unteransprüchen beschrieben.

Die Erfindung wird im folgenden anhand der Figuren an einem Ausführungsbeispiel näher erläutert. Es zeigen:

Fig. 1 in schematischer Blockdarstellung eine Melkanlage sowie die Verwendung des erfindungsgemäßen Adapters in dieser Melkanlage;

Fig. 2 in Seitendarstellung eine Ausführungsform des erfindungsgemäßen Adapters;

Fig. 3 einen Längsschnitt durch einen Luftfilter des Adapters gemäß Fig. 2;

Fig. 4 einen Längsschnitt durch die in der Verbindung zwischen Adaptereingang und Adapterausgang liegende Kammer mit Drossel und Druck bzw. Unterdruckanzeigegerät;

Fig. 5 einen Längsschnitt durch die den Adapterausgang bildenden Anschlußmittel.

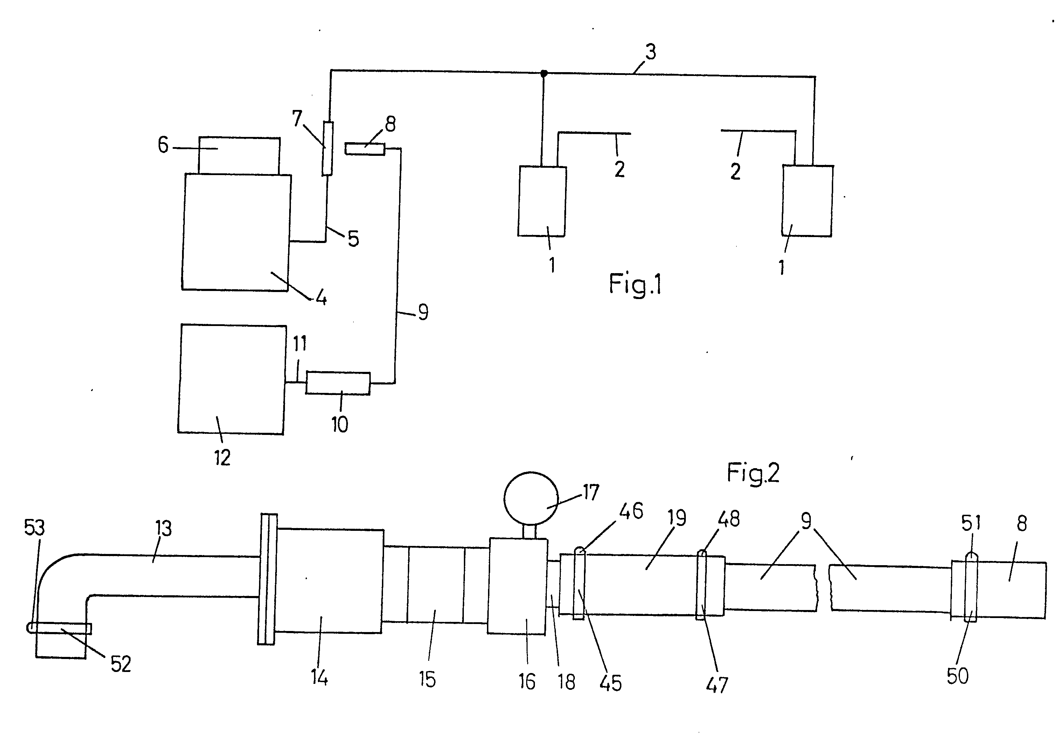

Die in der Fig. 1 dargestellte Melkanlage besitzt mehrere Melkeimer 1, die jeweils über Anschlußschläuche 2 mit nicht dargestellten Melkbechern verbunden sind. Jeder Melkeimer 1 ist an eine Saugleitung 3 angeschlossen, die zur Erzeugung eines Unterdrucks in dieser Saugleitung in den Unterdruckkessel 4 bzw. in ein an diesen Unterdruckkessel4 angeschlossenes Anschlußrohr 5 mündet. Der erforderliche Unterdruck im Unterdruckkessel 4 und damit in der Saugleitung 3 wird unter normalen Umständen durch eine Ansaugpumpe 6 erzeugt. Die Saugleitung 3 und das Anschlußrohr 5 sind nicht direkt miteinander verbunden, sondern über eine verformbare Manschette, z.B. über eine Manschette aus elastischem Material (beispielsweise Gummimanschette), wobei vor allem die Übertragung von durch die Ansaugpumpe 6 erzeugten Vibrationsbewegungen auf die Saugleitung 3 verhindert wird.

Bei einem Ausfall der in der Regel elektrisch betriebenen Ansaugpumpe 6, z.B. wegen eines Defektes in der Pumpe oder deren Antriebsmittel oder aber wegen eines Stromausfalls, wird die Manschette 7 von der Saugleitung abgezogen und an ihrer Stelle auf den Eingang der Saugleitung 3 eine Manschette 8 aufgeschoben, die zusammen mit dem Schlauch 9 den Ausgang des erfindungsgemäßen Adapters 10 bildet bzw. über den flexiblen Schlauch 9 mit den starren, rohrförmigen Teilen dieses Adapters verbunden ist. Der Eingang 11 des Adapters 10 ist an den Luftansaugstutzen eines Verbrennungsmotors 12, z.B. an den Luftansaugstutzen eines Schleppermotors oder eines Motors eines anderen Kraftfahrzeuges angeschlossen. Durch den zum Verbrennungsmotor 12 erzeugten Unterdruck ist es somit möglich, über den Adapter 10 die Melkanlage auch bei einem Ausfall der Ansaugpumpe zu betreiben. Hierfür sind jedoch einige konstruktive Besonderheiten im Adapter 10 erforderlich, die im folgenden im Zusammenhang mit den Fig. 2-5 an einem Ausführungsbeispiel näher erläutert werden sollen.

Bei der in den Fig. 2 -5 dargestellten Ausführungsform besteht der Adapter 10 aus mehreren, hintereinander angeordneten und miteinander verbundenen rohrförmigen Abschnitten, und zwar aus einem den Eingang 11 bildenden starren rohrförmigen Anschlußstutzen 13, der zur Erleichterung des Anschließens an den Luftansaugstutzen des Verbrennungsmotors 12 an seinem freien Ende gekrümmt ist, aus einem Abschnitt 14, der einen Luftfilter enthält, aus einem Abschnitt 15, der die mit der Drossel versehene Kammer bildet, aus einem Abschnitt 16, der das Druckanzeigegerät 17 trägt bzw. eine Kammer bildet, die mit dem Meßeingang dieses Anzeigegerätes verbunden ist, sowie aus einem Anschlußstutzen 18, der über eine Manschette 19, vorzugsweise über eine Manschette 19 aus durchsichtigem Material mit dem flexiblen Schlauch 9 und über diesen mit der Manschette 8 verbunden ist.

Die einzelnen Teile des Adapters 10 bestehen vorzugsweise aus Kunststoff. Dies gilt nicht nur für die starren Teile des Adapters, sondern auch für den flexiblen Schlauch 9 sowie für die Manschette 8, die vorzugsweise aus flexiblem Kunststoff hergestellt sind.

Selbstverständlich ist es möglich, auch den Anschlußstutzen 13 ganz oder teilweise flexibel auszubilden oder aber diesen Anschlußstutzen 13 über einen flexiblen Schlauch mit dem Abschnitt 14 des Adapters 10 zu verbinden.

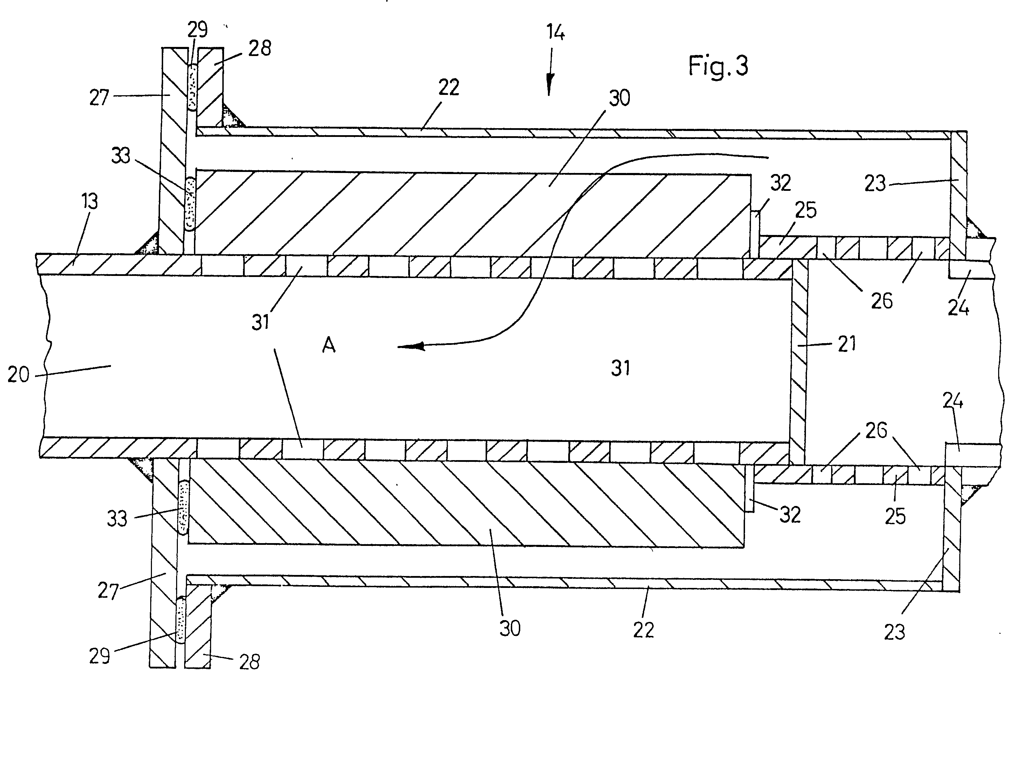

Fig. 3 zeigt im Detail einen Schnitt durch den das Luftfilter bildenden Abschnitt 15. Wie dieser Figur zu entnehmen ist, besteht das Luftfilter aus einem inneren rohrförmigen Teil 20, welcher sich an seinem einen Ende in den Anschlußstutzen 13 fortsetzt und an seinem anderen Ende durch eine Platte 21 luftdicht verschlossen ist. Weiterhin besteht das Luftfilter aus einer äußeren zylinderförmigen Umfangswandung 22, die den rohrförmigen Teil 20 konzentrisch umgibt. An der dem Anschlußstutzen 13 abgewandten Seite ist die Umfangswandung 22 mit dem äußeren Rand einer ringförmigen Abschlußwand 23 luftdicht verbunden, die senkrecht zur Achse der zylinderförmigen Umfangswand sowie zur Achse des rohrförmigen Teiles 20 liegt und die an ihrem inneren Rand luftdicht mit einem Ende eines rohrförmigen Teiles 24 verbunden ist, der achsgleich zum rohrförmigen Teil 20 liegt und, wie weiter unten noch erläutert wird, die mit der Drossel versehene Kammer bzw. den Abschnitt 15 bildet. Das mit der Abschlußwand 23 verbundene Ende des rohrförmigen Teiles 24 besitzt ebenso wie die Abschlußwand 23 einen gewissen Abstand von der den rohrförmigen Teil 20 verschließenden Platte 21.

Wie der Fig. 3 zu entnehmen ist, ist an der Innenseite der ringförmigen Abschlußwand 23 ein rohrförmiger Teil 25 befestigt, der ebenfalls achsgleich mit dem rohrförmigen Teil 20 liegt, und der eine solche Länge besitzt, daß der rohrförmige Teil 20 mit seinem durch die Platte 21 verschlossenen Ende geringfügig in das Innere des rohrförmigen Teiles 25 hineinreicht. Der Innendurchmesser des rohrförmigen Teiles 25 sowie der Außendurchmesser des rohrförmigen Teiles 20 sind so aneinander angepaßt, daß der rohrförmige Teil 20 an seinem Außenumfang möglichst dicht gegen die Innenfläche des rohrförmigen Teiles 25 anliegt. Der rohrförmige Teil 25 besitzt weiterhin in seinem zwischen der Platte 21 und der Abschlußwand 23 liegenden Bereich mehrere Durchgangsöffnungen 26.

Die Fig. 3 zeigt weiter, daß am rohrförmigen Teil 20 bzw. an der Übergangsstelle dieses rohrförmigen Teiles in den Anschlußstutzen 13 eine ringförmige über den Außenumfang des rohrförmigen Teiles wegstehende Abschlußwand 27 luftdicht befestigt ist, die über nicht näher dargestellte Schrauben an ihrem Außenumfang an einem Befestigungsflansch 28 anschraubbar ist, welch letzterer an der der Abschlußwand 23 entfernt liegenden Seite der Umfangswandung 22 vorgesehen ist. Zwischen dem Befestigungsflansch 28 und der Abschlußwandung 27 liegt eine als flacher Ring ausgebildete Dichtung 29, so daß bei angeschraubter Abschlußwand 27 diese zusammen mit der Umfangswandung 22 und der Abschlußwand 23 ein nach außen hin luftdicht verschlossenes zylinderförmiges Gehäuse bildet. Der im Inneren dieses Gehäuses liegende rohrförmige Teil 20 ist von einem ringförmigen oder hohlzylinderförmigen Filterelement 30 umgeben, welches beispielsweise entsprechend den bei Verbrennungsmotoren üblichen Luftfiltern aus Filterpapier ausgebildet ist. Im Bereich des Filterelementes 30 besitzt der rohrförmige Teil 20 an seinem Umfang eine Vielzahl von Durchlaßöffnungen 31, die von der vom Verbrennungsmotor 12 angesaugten Luft durchströmt werden. Um einen Luftfluß am Filterelement 30 vorbei zu vermeiden, liegt dieses Filterelement an seinem einen Ende über einen Dichtungsring 32 dichtend gegen das freie Ende des rohrförmigen Teiles 25 und an seinem anderen Ende über einen Dichtungsring 33 dichtend gegen die Innenfläche der Abschlußwand 27 an. Bei Anschluß des Adapters 10 an den Verbrennungsmotor 12 strömt die angesaugte Luft aus dem rohrförmigen Teil 24 durch die Öffnungen 26 zunächst in den äußeren ringförmigen Teil des Luftfilters 14, der unmittelbar von der Umfangswandung 22 nach außen hin begrenzt wird, und von dort durch das Filterelement 30 und die Durchlaßöffnungen 31 in den von dem rohrförmigen Teil 20 gebildeten inneren Teil dieses Luftfilters. Durch das Filterelement 30 werden Staubbestandteile oder andere Bestandteile, die zu einer Beschädigung des Verbrennungsmotors 12 führen könnten, zurückgehalten. Weiterhin kann sich ev. mit der Luft angesaugte Flüssigkeit, z.B. Kondenswasser, in dem äußeren, sich unmittelbar an die Umfangswandung 22 anschließenden Bereich des Filters 14 absetzen. Zum Auswechseln des Filterelementes 30 wird die Schraubverbindung zwischen der Abschlußwand 27 und dem Befestigungsflansch 28 gelöst, so daß nach dem Herausziehen des rohrförmigen Teiles 20 aus dem Abschnitt bzw. Filter 14 das Filterelement 30 abgenommen und durch ein neues, unverbrauchtes Filterelement ersetzt werden kann.

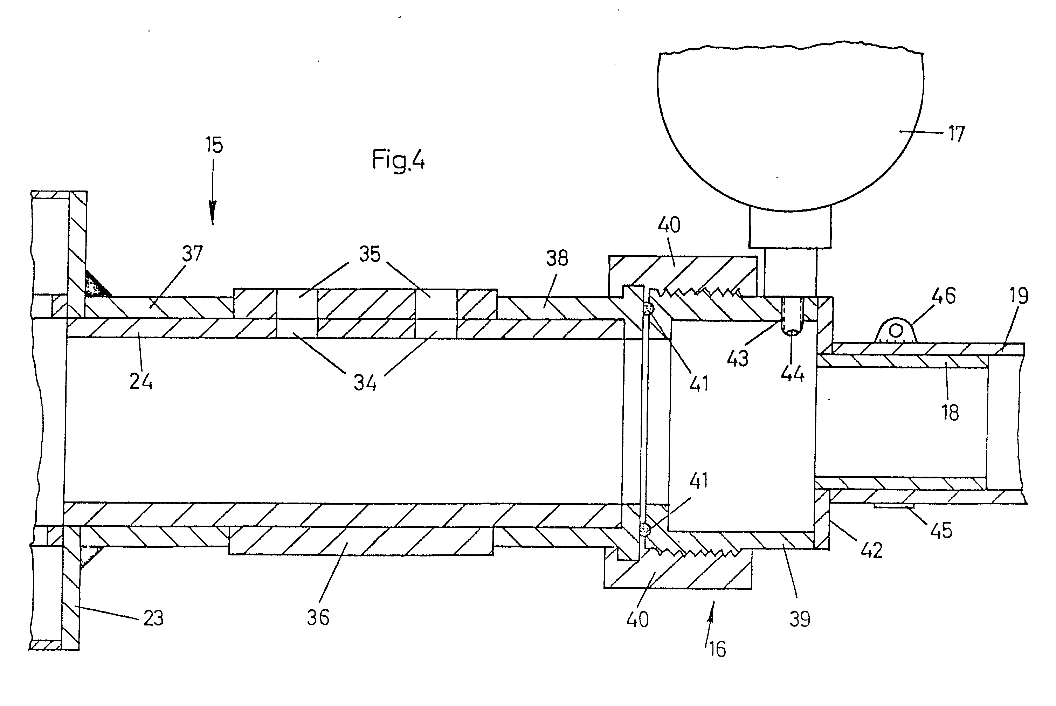

Fig. 4 zeigt einen Schnitt durch die Abschnitte 15 und 16 des Adapters 10. Der Abschnitt 15 wird im wesentlichen von dem rohrförmigen Teil 24 gebildet, der bei der dargestellten Ausführungsform zwei Öffnungen bzw. Durchgangsbohrungen 34 besitzt, denen gleich große und gleichartig angeordnete Bohrungen 35 in einem den rohrförmigen Teil 24 umgebenden Ring 36 zugeordnet sind. Durch Verdrehen des eng gegen die Außenfläche des rohrförmigen Teiles 24 anliegenden Ringes 36 können dessen Öffnungen 35 ganz oder teilweise mit den Durchgangsbohrungen 34 zur Deckung gebracht werden, d.h. der effektive Querschnitt der Öffnungen, mit denen der Innenraum des rohrförmigen Teiles 24 mit der Außenatmosphäre in Verbindung steht, kann durch Verdrehen des Ringes 36 eingestellt werden. Selbstverständlich ist es auch möglich, den Ring 36 so zu verdrehen, daß die Durchgangsbohrungen 34

- 9 -

vom Ring 36 vollständig verschlossen sind, Um ein Verrutschen des Ringes 36 auf dem rohrförmigen Teil zu vermeiden, sind beidseitig vom Ring 36 Halteringe 37 und 38 befestigt.

An der dem Abschnitt bzw. dem Filter 14 abgewandten Seite ist an dem Abschnitt 15 der von dem rohrförmigen Teil 39 gebildete Abschnitt 16 abnehmbar befestigt, und zwar mit Hilfe einer Überwurfmutter 40, die am Abschnitt 15 gehalten ist und mit ihrem Innengewinde in ein Außengewinde des rohrförmigen Teiles 39 eingreift. Zur luftdichten Verbindung ist zwischen den Abschnitten 15 und 16 eine Ringdichtung 41 vorgesehen. Der rohrförmige Teil 39, der an seinem dem Abschnitt 15 entfernt liegenden Ende mit dem äußeren Bereich einer ringförmigen Abschlußwand 42 luftdicht verbunden ist, trägt das Druckanzeigegerät 17, welches mit einem Anschlußstutzen 43 luftdicht in eine Gewindebohrung des rohrförmigen Teils 39 eingeschraubt ist und dessen Meßeingang 44 mit dem Inneren der von dem rohrförmigen Teil 39 gebildeten Kammer in Verbindung steht. Das Druckanzeigegerät 17 wird von einem üblichen Unterdruckmesser bzw. Unterdruckmanometer gebildet. An der Innenöffnung der Abschlußwand 42 ist der ebenfalls von einem rohrförmigen Teil gebildete Anschlußstutzen 18 befestigt, der die vorzugsweise aus durchsichtigem Material hergestellte Manschette 19 trägt. Die Herstellung der Manschette 19 aus durchsichtigem Material hat den Vorteil, daß ein ev. unerwünschtes Ansaugen von Flüssigkeit, z.B. von Milch beobachtet werden kann. Die Manschette 19 ist auf dem Anschlußflansch 18 mit Hilfe eines Spannringes 45 befestigt, der auch eine Halteöse 46 zum Aufhängen bzw. zum Halten des Adapters 10 trägt. Selbstverständlich ist es möglich, die Manschette 19 auch auf andere Weise, z.B. durch Kleben usw. am Anschlußstutzen 18 zu befestigen, wobei dann der Spannring 45 entfallen kann oder aber anstelle des Spannringes 45 ein Ring verwendet werden kann, der lediglich zur Halterung der Halteöse 46 dient.

Die von dem Ring 36 und den Durchgangsbohrungen 34 sowie von den Öffnungen 35 gebildete einstellbare oder veränderbare Drossel sowie das Druckanzeigegerät 17 sind notwendig, um einerseits sicherzustellen, daß der Verbrennungsmotor 12 eine für den Verbrennungsvorgang in diesem Motor ausreichende Luftmenge durch die von den Öffnungen 35 und den Durchgangsbohrungen 34 resultierenden Drosselöffnungen ansaugen kann, wenn die über den Schlauch 9, die Manschette 19 und den Anschlußstutzen 18 zugeführte Luftmenge für die Aufrechterhaltung des Verbrennungsvorganges im Verbrennungsmotor 12 nicht ausreichend ist, was in der Regel der Fall ist. Die resultierenden Drosselöffnungen werden hierbei durch entsprechendes Verdrehen des Ringes 36 gleichzeitig so eingestellt, daß am Ausgang des Adapters 10 und damit auch in der Saugleitung 3 der für den Melkvorgang erforderliche Unterdruck erzeugt wird. Diese Einstellung erfolgt durch Ablesen des Druckanzeigegerätes 17.

Bei der vorangegangenen Beschreibung wurde davon ausgegangen, daß im Abschnitt 15 zwei resultierende Drosselöffnungen vorgesehen sind, die jeweils von einer Durchgangsbohrung 34 im rohrförmigen Teil 24 und einer Öffnung 35 im Ring 36 gebildet sind. Selbstverständlich sind auch Ausführungen denkbar, bei denen im Abschnitt 15 nur eine resultierende Drosselöffnung vorgesehen ist, oder aber bei denen im Abschnitt 15 eine Vielzahl derartiger Drosselöffnungen vorgesehen ist.

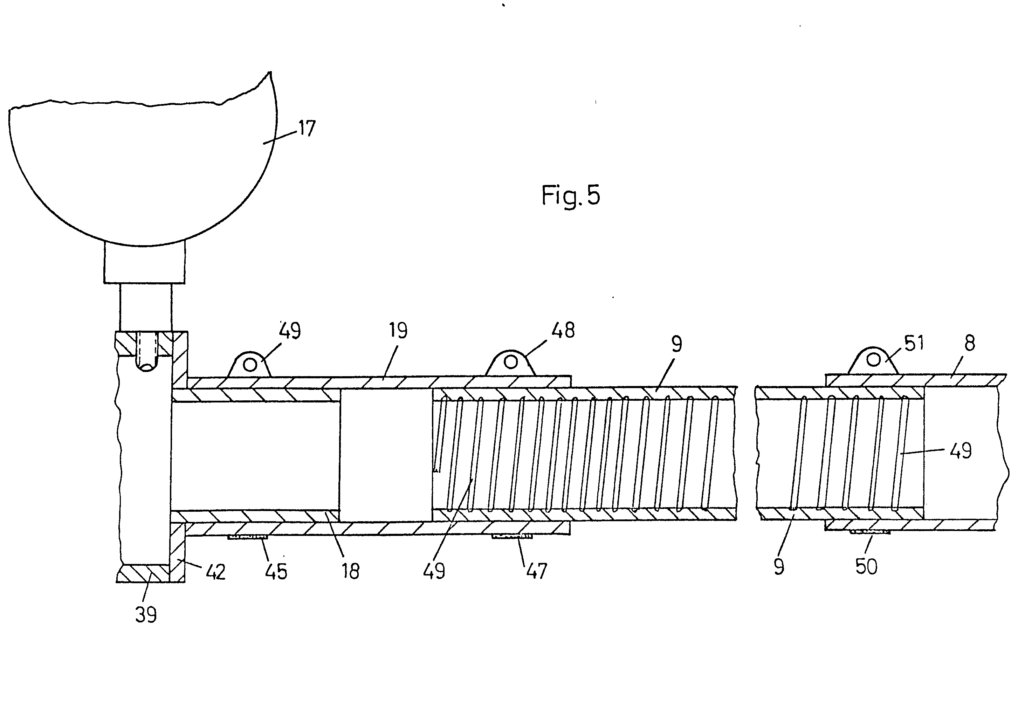

Wie die Fig. 5 zeigt, ist die Manschette 19 an ihrem dem Abschnitt 16 entfernt liegenden Ende wiederum mit einem Spannring 47, der eine Halteöse 48 trägt, am flexiblen Schlauch 9 gehalten. Selbstverständlich kann die Verbindung zwischen der Manschette 19 und dem Schlauch 9 auch auf andere Weise, z.B. durch Kleben usw. erfolgen. In diesem Fall ist es dann wiederum möglich, anstelle eines Spannringes 47 einen Ring zu verwenden, der lediglich zur Halterung der Halteöse 48 dient. Um zu vermeiden, daß der flexible Schlauch 9 infolge des Unterdrucks in diesem Schlauch zusammengedrückt wird, ist in das den Schlauch 9 bildende Material eine Spirale 49 aus widerstandsfähigem Material, z.B. aus Metall- oder Federdraht eingebettet, die sich über die gesamte Länge des Schlauches 9 erstreckt.

Die Verbindung des Schlauches 9 mit der mit einem Ende über diesen Schlauch geschobenen Manschette 8 erfolgt beispielsweise wiederum mit Hilfe eines Spannringes 50, der eine Halteöse 51 trägt. Auch hier ist selbstverständlich eine Befestigung bzw. Verbindung auf andere Weise, z.B. durch Kleben usw. denkbar, wobei dann anstelle eines Spannringes 50 ein Ring verwendet werden kann, der lediglich zur Befestigung der Halteöse 51 dient. Auch an dem Anschlußstutzen 13 ist vorzugsweise ein Ring 52 mit einer Halteöse 53 befestigt.

Die Erfindung wurde voranstehend an einem Ausführungsbeispiel beschrieben. Es versteht sich, daß Abwandlungen sowie Änderungen möglich sind, ohne daß dadurch der der Erfindung zugrundeliegende Gedanke verlassen wird.

P a t e n t a n s p r ü c h e

1. Adapter zum Anschluß der Saugleitung einer Melkanlage an den Luf·ansaugstutzen eines Verbrennungsmotors, dadurch gekennzeichnet, daß der Adaptereingang (11) und der Adapterausgang (8, 9) über eine durch eine Umfangswand (24, 39) nach außen begrenzte Kammer miteinander in Verbindung stehen, daß in der Umfangswand der Kammer wenigstens eine in ihrem Querschnitt veränderbare Drosselöffnung (34, 35) vorgesehen ist, und daß ein Druckanzeigegerät (17) vorgesehen ist, dessen Meßeingang (44) mit dem Inneren der Kammer in Verbindung steht.

2. Adapter nach Anspruch 1, dadurch gekennzeichnet, daß die im Querschnitt veränderbare Dosselöffnung von wenigstens einer Öffnung (34) in der Umfangswand (24) der Kammer gebildet ist, und daß zur Veränderung des Querschnitts der Drosselöffnung an der Umfangswand (24) ein relativ zu dieser Umfangswand verschiebbares Element (36) befestigt ist, welches wenigstens eine weitere Öffnung (35) besitzt, die sich beim Verschieben des Elementes (36) ganz oder teilweise mit der Öffnung (34) in der Umfangswand (24) deckt.

3. Adapter nach Anspruch 2, dadurch gekennzeichnet, daß die Umfangswand wenigstens teilweise von einem rohrförmigen Abschnitt (24) gebildet ist, und daß das an dieser Umfangswand verschiebbar gehalterte Ele-ment ein Ring (36) ist.

4. Adapter nach einem der Ansprüche 1-3, dadurch gekennzeichnet, daß zwischen Adaptereingang (11) und Adapterausgang (8, 9) weiterhin ein Luftfilter (14) vorgesehen ist.

5. Adapter nach Anspruch 4, dadurch gekennzeichnet, daß das Luftfilter eine äußere und eine innere Kammer aufweist, und daß beide Kammern durch ein Filterelement voneinander getrennt sind.

6. Adapter nach Anspruch 4 oder 5, dadurch gekennzeichnet, daß das Luftfilter ein Filterelement (30) aus Filterpapier enthält.

7. Adapter nach einem der Ansprüche 1 bis 6, gekennzeichnet durch seine Herstellung aus Kunststoff.

8. Adapter nach einem der Ansprüche 1 bis 7, dadurch gekennzeichnet, daß der Adapterausgang von einem flexiblen Schlauch (9) gebildet ist.

9. Adapter nach einem der Ansprüche 1 bis 8, dadurch gekennzeichnet, daß wenigstens ein Teil (19) der Außenwandung des Adapters aus einem transparenten bzw. durchsichtigem Material besteht.

10. Adapter nach Anspruch 9, dadurch gekennzeichnet, daß eine den Adapterausgang (8, 9) mit dem übrigen Adapter verbindende Manschette (19) aus transparentem bzw. aus durchsichtigem Material hergestellt ist.

11. Adapter nach einem der Ansprüche 1 bis 10, dadurch gekennzeichnet, daß der Ausgang des Adapters von einem flexiblen Schlauch (9) mit einer in bzw. an der Wandung des Schlauches vorgesehenen Verstärkung in Form einer Spirale (49) gebildet ist.

Fig.1

Fig.2

Fig.3

0032970

Fig.4

0032970

Fig. 5

Europäisches Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 2 718 871 (A.C. ROBLEY) <br> * Spalte 1, Zeilen 19-26; Spalte 2, Zeile 5 bis Spalte 3, Zeile 6; Figur 1 * <br> -- | 1 |
| X | GB - A - 700 274 (WESTFALIA SEPARATOR) <br> * Seite 1, Zeilen 38-48; 64-70; Seite 1, Zeile 94 bis Seite 2, Zeile 6; Figuren 1,2 * <br> -- | 1,8 |
| X | GB - A - 1 497 027 (P.J. RYAN) <br> * Seite 1, Zeilen 9-19; Seite 2, Zeilen 7-32; Figuren 2-4 * <br> -- | 1,8 |
|  | US - A - 2 176 139 (G.E. LOFGREN) <br> * Seite 1, Spalte 2, Zeilen 20-47; Figuren 2-5 * <br> -- | 2,3 |
|  | FR - A - 1 219 889 (M.A. KNECHT) <br> * Das ganze Dokument * <br> -- | 4-6 |
|  | DE - C - 921 116 (A. STAPEL) <br> * Anspruch 2 * <br> -- | 9-10 |
|  | DE - A - 2 547 901 (LICENTIA PATENTVERWALTUNGS GmbH) <br> * Seite 5, Zeilen 18-23 * <br> -- ./. | 11 |

**KLASSIFIKATION DER ANMELDUNG (Int Cl.³)**

A 01 J 5/04

**RECHERCHIERTE SACHGEBIETE (Int Cl.³)**

A 01 J
A 47 B
A 47 L

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 12-02-1981 | NEHRDICH |

EPA form 1503.1   06.78

| | Europäisches Patentamt | **EUROPÄISCHER RECHERCHENBERICHT** | |
|---|---|---|---|

| | **EINSCHLÄGIGE DOKUMENTE** | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| A | US - A - 1 329 451 (H.B. BABSON A.C. MACARTNEY) | | |
| A | DE - C - 308 775 (O. OHLSSON) | | |
| | ----- | | |
| | | | **RECHERCHIERTE SACHGEBIETE (Int. Cl.³)** |